Europäisches Patentamt

European Patent Office

Office européen des brevets

(19)

(11) Veröffentlichungsnummer: **0 111 710
B1**

(12) **EUROPÄISCHE PATENTSCHRIFT**

(45) Veröffentlichungstag der Patentschrift :
30.08.89

(51) Int. Cl.⁴ : **C 03 B 23/18**

(21) Anmeldenummer : 83110985.5

(22) Anmeldetag : 04.11.83

(54) Verfahren zum Herstellen von Rohrfläschchen.

(30) Priorität : 16.11.82 DE 3242326

(43) Veröffentlichungstag der Anmeldung :
27.06.84 Patentblatt 84/26

(45) Bekanntmachung des Hinweises auf die Patenterteilung : 30.08.89 Patentblatt 89/35

(84) Benannte Vertragsstaaten :
AT BE CH DE FR GB IT LI NL

(56) Entgegenhaltungen :
CH--A-- 469 485
DE--B-- 1 114 992
DE--C-- 683 259
FR--A-- 1 424 386
FR--A-- 1 488 259
US--A-- 3 719 463

(73) Patentinhaber : SCHOTT-RUHRGLAS GMBH
Theodor-Schmidt-Strasse 25
D-8580 Bayreuth (DE)

(72) Erfinder : Ritt, Hans Georg, Dr.
Schillerstrasse 14
D-6501 Budenheim (DE)
Erfinder : Lüneberg, Hartmut, Dr.
Erbstrasse 13
D-8596 Mitterteich (DE)
Erfinder : Männl, Reinhard
Hofstattstrasse 7
D-8596 Mitterteich (DE)
Erfinder : Grillmeier, Alfred
Johannisplatz 10
D-8596 Mitterteich (DE)

(74) Vertreter : Dr. Fuchs, Dr. Luderschmidt Dipl.-Phys.
Seids, Dr. Mehler Patentanwälte
Sonnenberger Strasse 100
D-6200 Wiesbaden (DE)

**Beschreibung**

Die vorliegende Erfindung bezieht sich auf ein neues Verfahren zum Herstellen von Glasrohrfläschchen, bei dem ein Glasrohr an beiden Enden einer Rohrlänge erweicht wird, die erweichten Enden axial ausgezogen werden, bis das Glasrohr zusammenfällt und geschlossene Rohrenden erhalten werden, und bei dem in unmittelbarer Nähe des einen geschlossenen Rohrendes eine punktförmige Öffnung angebracht wird, und die so päparierte Rohrlänge in einen Fertigungsautomaten eingesetzt und dort zu Glasfläschchen verarbeitet wird.

Fläschchen werden überwiegend aus Glasröhren hergestellt. Die Glasröhren werden kontinuierlich erzeugt, indem auf einer leicht geneigten Rohrziehvorrichtung die Glasschmelze auf einen rotierenden Dorn gegeben wird und Druckluft über die den Dorn tragende, durchbohrte Welle ins Innere des sich bildenden Glasschlauches eingeblasen wird. Das Rohr wird gezogen und auf einer Rollbahn zu einer Schneidvorrichtung gefördert, wo Rohrlängen von etwa 1,50 m abgetrennt und seitlich abrollen gelassen werden. Aus derartigen Rohrlängen werden die Rohrfläschchen hergestellt.

Die Fläschchenfertigung erfolgt überwiegend auf Karussellmaschinen bei senkrechter Rohrstellung, und zwar in intermittierender oder kontinuierlicher Arbeitsweise oder aber, seltener, auf Horizontalmaschinen.

Auf dem Karusselautomaten wird zunächst am unteren Ende der Glasröhre das Rohr thermisch durchtrennt, wobei sich zwei Böden bilden, von denen der untere zusammen mit dem kurzen Rohrendstück verworfen wird, während der obere Boden mittels einer Stichflamme geöffnet und an dieser Stelle die Mündung des ersten Fläschchens geformt wird ; danach wird in einer der Länge des Fläschchens entsprechenden Höhe das Rohr stark eingeschnürt und durchschmolzen, wobei gleichzeitig Böden am nunmehr abgetrennten ersten Fläschchen und dem restlichen Rohr entstehen. Mittels eines Stichbrenners wird der Boden am Restrohr geöffnet, worauf die vorstehend geschilderten Arbeitsschritte an diesem restlichen Glasrohr erneut durchgeführt werden.

Diese bekannten Verfahren zur Fläschchenfertigung weisen schwerwiegende Nachteile auf. Besonders gravierend ist, daß es, insbesondere bei der Fläschchenfertigung, nicht zu vermeiden ist, z. B. beim Öffnen eines Bodens mittels einer Stichflamme, daß Verbrennungsgase, Öldämpfe und leichte flüchtige Glaskomponenten ins Innere des Glasbehälters oder des Glasrohrs geblasen werden und sich dort niederschlagen.

Die Aufgabe der vorliegenden Erfindung ist daher, die geschilderten Nachteile bei der Fläschenfertigung zu beheben. Aufgabe der Erfindung ist insbesondere ein Verfahren, welches Rohrfläschchen in einem derart sauberen Zustand liefert, daß sie ohne Reinigung mit pharmazeutischen Produkten gefüllt werden können. Diese Aufgabe wird mit einem Verfahren gemäß Anspruch 1 gelöst, bei welchem eine Rohrlänge so verwendet wird, daß bei allen Verfahrensschritten ein leichter Überdruck in dem Glasrohr aufrechterhalten wird.

Ein Verfahren gemäß dem Oberbegriff des Anspruchs 1 ist aus der DE-B-1 114 992 bekannt.

Danach werden Glasröhren, die zur Fertigung von Ampullen bestimmt sind, zur Vermeidung von Beschädigungen beim Transport und zur Erhöhung ihrer Widerstandsfähigkeit gegen Bruch nach dem Verlassen einer in der Glasherstellung üblichen Ziehvorrichtung an ihren offenen Enden erweicht und ausgezogen und somit verschlossen.

Die Erfindung wird nachstehend an beispielhaften Ausführungsformen näher erläutert :

Herstellung von erfindungsgemäß verwendbaren Rohrlängen

Die von dem kontinuierlichen Glasrohrstrang (beispielsweise durch Wärmeschock) abgetrennten Rohrlängen werden an beiden Enden (nacheinander oder gleichzeitig) durch Brenner erweicht, und die erweichten Enden werden mittels einer in axialer Richtung wirkenden Kraft ausgezogen, bis das Rohr zusammenfällt und ein geschlossener Rohr querschnitt erhalten wird. Dabei sintern die gegebenenfalls am Rohrende hängenden Glassplitter an und werden mit abgezogen.

Nachdem die Rohrlänge beidseitig verschlossen wurde oder, vorzugsweise, nachdem das eine Ende des offenen Rohres verschlossen wurde, wird an diesem Ende eine punktförmige Öffnung mittels eines Stichbrenners angebracht. Diese punktförmige Öffnung kann direkt an dem genannten Boden angeordnet sein ; sie wird jedoch vorzugsweise an eine Stelle der Rohrwandung in der Nähe dieses Bodens gelegt. Der Durchmesser dieser punktförmigen Öffnung liegt vorzugsweise zwischen 0,5 und 1,5 mm, d. h. daß diese Öffnung im allgemeinen deutlich weniger als 1 % der bei einem herkömmlichen (beidseitig offenen) Rohr vorhandenen offenen Fläche ausmacht.

Diese punktförmige Öffnung kann durch einen Film wieder verschlossen werden. Dieser Film soll derart beschaffen sein, daß er bei mäßiger Erwärmung erweicht und dann unter geringem Druck aufplatzt, oder er soll aus einem Material bestehen, welches rückstandsfrei verbrennt, wie beispielsweise Filterpapier. Vorzugsweise wird dieser Film aus einer Kunststoffolie erzeugt, indem beispielsweise das noch heiße Rohr mit einer geeigneten Folie derart in Berührung gebracht wird, daß die Folie im Bereich der punktförmigen Öffnung am Rohr anklebt und diese Öffnung in Form eines dünnen Films verschließt. Es ist auch möglich die punktförmige Öffnung bei ihrer Erzeugung durch ein dünnes Glashäutchen wieder zu verschließen.

Die derart präparierten Rohrlängen befinden sich in einem sehr sauberen Zustand. Werden die Rohrlängen dann noch nach einem Verfahren zu Rohrpaketen verpackt, wie es in der DE-A-27 29 266 beschrieben ist, wobei sie in dichtester Packung neben- und übereinander liegend von einer Haube aus flexiblem Material umschlossen (versiegelt) werden, dann gelangen sie in doppelt geschütztem Zustand zu dem Rohrfläschchen hersteller, der nun — gemäß der vorliegenden Erfindung — die Rohrfläschchenfertigung in einer Art und Weise durchführt, die sich gegenüber den herkömmlichen Fertigungsverfahren durch verbesserte Reinheit auszeichnet.

Vorzugsweise wird mindestens das eine der beiden verschlossenen Rohrenden mit einer planen Gestalt geformt; dies erleichtert oder vereinfacht unter Umständen das spätere Fertigungsverfahren.

### Herstellung von Rohrfläschchen

Die Rohrlänge wird auf den Fertigungsautomaten derart aufgesetzt, daß die punktförmige Öffnung bzw. die durch den Film verschlossene Öffnung unten liegt. In ihrem oberen Bereich wird die Rohrlänge mäßig erwärmt. An einer Stelle oberhalb der punktförmigen, gegebenenfalls durch einen Film verschlossenen Öffnung wird das Rohr thermisch durchtrennt, wobei sich sowohl an dem unteren Rohrstück, das verworfen wird, als auch an dem restlichen Rohr ein Boden bildet, der jedoch infolge des innerhalb des Rohres sich aufbauenden Überdrucks sofort wieder aufplatzt. An dieser Stelle wird die Mündung des ersten Rohrfläschchens geformt. In einem der Länge des Rohrfläschchens entsprechenden Abstand von dieser Stelle wird das Rohr erneut thermisch durchtrennt wobei nach unten der Boden des ersten Rohrfläschchens und nach oben ein weiterer Boden entsteht, der jedoch infolge des erneut sich aufbauenden, inneren Überdrucks sogleich wieder aufplatzt. Mit der Formung der Mündung des nächsten Rohrfläschchens an dieser Stelle wiederholt sich das geschilderte Verfahren.

### Patentansprüche

1. Verfahren zum Herstellen von Glasrohrfläschchen, bei dem ein Glasrohr an beiden Enden einer Rohrlänge erweicht wird, die erweichten Enden axial ausgezogen werden, bis das Glasrohr zusammenfällt und geschlossene Rohrenden erhalten werden, und bei dem in unmittelbarer Nähe des einen geschlossenen Rohrendes eine punktförmige Öffnung angebracht wird und die so präparierte Rohrlänge in einen Fertigungsautomaten eingesetzt und dort zu Glasfläschchen verarbeitet wird, dadurch gekennzeichnet, daß die Rohrlänge in vertikaler Anordnung derart in den Fertigungsautomaten eingesetzt wird, daß die punktförmige Öffnung unten liegt, daß an dem oberen Ende die Rohrwandung mäßig erwärmt wird, daß an einer Stelle oberhalb der punktförmigen Öffnung die Rohrlänge thermisch durchtrennt wird, wobei sich auch an dem restlichen Rohr vorübergehend ein Boden bildet, der jedoch infolge des sich aufbauenden Überdrucks sofort wieder aufplatzt, daß an dieser Stelle die Mündung des ersten Rohrfläschchens geformt wird, daß in einem der Länge des Rohrfläschchens entsprechenden Abstand von dieser Stelle das Rohr erneut thermisch durchtrennt wird, wobei gleichzeitig der Boden des ersten Rohrfläschchens und ein weiterer Boden an dem restlichen Rohr gebildet werden, der jedoch infolge der sich aufbauenden inneren Überdrucks sofort wieder aufplatzt, und daß die Verfahrensschritte an dem restlichen Rohr wiederholt werden, wodurch Rohrfläschchen entstehen, die eine für pharmazeutische Anwendungen geeignete Sauberkeit aufweisen.

2. Verfahren nach Anspruch 1, dadurch gekennzeichnet, daß die punktförmige Öffnung mittels eines durch Wärmeeinwirkung rückstandslos entfernbaren Verschlusses verschlossen ist.

3. Verfahren nach Anspruch 1 oder 2, dadurch gekennzeichnet, daß mindestens das eine der beiden geschlossenen Enden der Rohrlänge mit einer planen Gestalt geformt wird.

### Claims

1. A process to produce tubular vials, whereby a glass tube is softened at both ends of a tube length, the softened ends being axially stretched until the glass tube is collapsing and sealed tube ends are obtained and whereby close by one of the sealed tube ends a dot-shaped opening is provided and the thus prepared tube length is inserted into a production machine and is there processed into vials, characterized in that the tube length is inserted into the production machine in a vertical arrangement in such a way that the dot-shaped opening is located at the bottom, that at the upper end the tube side is moderately warmed up, that the tube length is severed thermally and in doing so a bottom is temporarily formed at the remaining tube, too, which will instantly burst open because of the developping overpressure, that the aperture of the first tubular vial is formed at this site, that, at a distance from this site according to the length of the tublar vial, the tube is thermally severed once more and while doing so the bottom of the first tubular vial and a further bottom are formed simultaneously at the remaining tube which again will instantly burst open in consequence of the developping overpressure, and that the proceedings are repeated with the remaining tube whereby tubular vials are formed which show a cleanness being qualified for pharmaceutic applications.

2. A process according to claim 1, characterized dot-shaped opening is closed by means of a closure being volatizable without residue.

3. A process according to claim 1 or 2, characterized in that at least one of the two sealed ends of the tube length is formed in a planar shape.

## Revendications

1. Procédé pour la fabrication de flacons tubulaires en quoi un tube de verre est amolli à tous deux bouts d'une longueur de tube, les bouts amollis étant étirés axialement jusque le tube de verre affaisse et des embouts de tube clos sont reçus et en quoi, au voisinage immédiat de l'un des embouts de tube clos un orifice ponctuel est placé et la longueur de tube si préparée est mise dans un producteur automatique et ici est transformée en flacons, caractérisé en ce que la longueur de tube est mise dans le producteur automatique d'un arrangement vertical de telle manière, que l'orifice ponctuel est situé en bas, qu'au bout supérieur la paroi du tube est échauffée modérément, qu'à un endroit au-dessus de l'orifice ponctuel la longueur de tube est coupée thermiquement, à l'occasion de quoi un fond se forme temporairement aussi au tube restant, cependant ledit fond crève à l'instant en conséquence de la surpression naissante, qu'à cet endroit l'embouchure du premier flacon tubulaire est formée, qu'à une distance de cet endroit correspondant à la longueur du flacon tubulaire, le tube est coupé de nouveau à l'occasion de quoi le fond du premier flacon tubulaire et un autre fond sont formés simultanément au tube restant, cependant ledit fond au tube restant crève à l'instant en conséquence de la surpression naissante intérieure et que les opérations de base au tube restant sont répétées par quel moyen se forment des flacons tubulaires, qui montrent une propreté appropriée pour des usages pharmaceutiques.

2. Procédé suivant la revendication 1, caractérisé en ce que l'orifice ponctuel est obturé par moyen d'une fermeture qui est éliminable sans résidus par effet de chaleur.

3. Procédé suivant les revendications 1 ou 2, caractérisé en ce qu'au moins l'un des deux embouts obturés de la longueur du tube est formé d'une forme plane.